# EUROPEAN PATENT APPLICATION

(11) **EP 4 592 647 A1**
(43) Date of publication of application: **30.07.2025**
(21) Application number: 24154039.2
(22) Date of filing: 25.01.2024
(51) Int. Cl.: G01F 1/66, E03C 1/10, G01M 3/28, G08B 21/20

(54) **MONITORING WATER FLOW**

(71) Applicant: Helvar Oy Ab, 02150 Espoo (FI)
(72) Inventor: JUSLÉN, Henri, 02150 ESPOO (FI); RISTOJA, Paula, 02150 ESPOO (FI)
(74) Representative: Berggren Oy

(57) **Abstract**

According to an embodiment, an apparatus (100) for monitoring water flow via a water outlet of a pipe network for water distribution is provided, the apparatus (100) comprising: a sensor portion (110) comprising one or more sensors arranged to supply respective sensor data that is descriptive of a respective environmental characteristic at a location of the water outlet, the sensor data obtained for given time instant forming a respective environmental sensor picture for the respective time instant; a memory (122) arranged to store one or more environmental sensor pictures; and a processing portion (120) arranged to determine at least one indication pertaining to the water flow via the water outlet based on one or more environmental sensor pictures obtained for a monitoring period.

## Description

### TECHNICAL FIELD

The present invention relates to monitoring of water flow via a water outlet of a water supply network.

### BACKGROUND

Water supply networks for distributing water for domestic use via a water supply network to consumers in homes, workplaces, public, schools, public facilities, etc. forms a fundamental piece of infrastructure of modern society. While sufficient quality and availability of domestic water is in many parts of the world taken as granted, domestic water is nevertheless a crucial resource and observing water flow via water outlets that enable drawing water from a water supply network is becoming increasingly important e.g. in terms of ensuring quality of the water available via the water outlets and in terms of the amount of water supplied via the water outlets.

Water drawn from such a water supply network is typically safe for personal consumption and other domestic use without any additional measures. However, water that has been standing still in a section of the pipeline for a prolonged time period may be subject to quality degradation, whereas the quality degradation may become more severe and/or it may occur faster in relatively high temperatures. In this regard, the water may be standing still e.g. in pipeline sections that are within consumer premises due to prolonged absence of occupants of the premises and/or due to infrequent use of some water outlets in the premises. Examples of phenomena causing water quality degradation include a change in water temperature (in comparison to the desired or intended temperature), increased iron concentration of water and/or increased amount of microbes or bacteria in the water. A specific example of microbes growing in the water that stands still in a pipeline section for a prolonged time, especially at temperatures between 20 to 45 degrees Celsius, is Legionella, which constitutes a serious health risk.

A straightforward manner of avoiding consumption of water that may have compromised quality due to the water having stood still in a pipeline section is let the water run for a certain time period before taking water for consumption, which may be also referred to as flushing. Flushing in a range from a few seconds to a few tens of seconds may be required to ensure sufficient water quality in terms of degradation possibly occurring in standing-still water, where a suitable duration for a flushing period depends on the circumstances (e.g. on the length of the pipeline section where the water is standing still, the duration of the stand-still state, ambient temperature, etc.).

While carrying out the flushing when it is necessary to ensure quality of the water results in drainage of water that is anyway non-suited to serve as drinking water, flushing water that has not stood still in the pipeline quite obviously constitutes unnecessary draining of good-quality water. On a similar note, any water flow from the water outlet without a certain usage for the water being drawn from the water supply network constitutes a waste of potentially good-quality water and it should be avoided whenever possible. Moreover, a knowledge regarding absence of water flow via water outlets while e.g. water flow gauges applied to measure water flow in the water supply network indicate water flow may serve as an indication of a leak or even a breakdown within the water supply network.

Consequently, monitoring water flow from a water outlet of a water distribution system would be advantageous in order to provide users with information that enables them to take necessary measures for ensuring good quality water while enabling avoidance of unnecessary waste of good quality water. Such water flow monitoring would also serve the purpose of general monitoring of the water flow in the water supply network e.g. via detecting an extent of usage of a certain water outlet, via detecting possible water leaks through a certain water outlet, via detecting water leaks elsewhere in the water supply network, etc.

### SUMMARY

It is an object of the present invention to provide a technique for monitoring water flow via a water outlet of a pipe network applied for water distribution.

According to an embodiment, an apparatus for monitoring water flow via a water outlet of a pipe network for water distribution is provided, the apparatus comprising: a sensor portion comprising one or more sensors arranged to supply respective sensor data that is descriptive of a respective environmental characteristic at a location of the water outlet, the sensor data obtained for given time instant forming a respective environmental sensor picture for the respective time instant; a memory arranged to store one or more environmental sensor pictures; and a processing portion arranged to determine at least one indication pertaining to the water flow via the water outlet based on one or more environmental sensor pictures obtained for a monitoring period.

According to another embodiment, a method for monitoring water usage via a water outlet of a pipe network for water distribution is provided, the method comprising: obtaining respective sensor data that is descriptive of a respective environmental characteristic at a location of the water outlet, the sensor data obtained for given time instant forming a respective environmental sensor picture for the respective time instant; storing one or more environmental sensor pictures into a memory (122) and determining at least one indication pertaining to water usage via the water outlet based on the one or more environmental sensor pictures obtained for a monitoring period.

The exemplifying embodiments of the invention and variations thereof presented in this patent application are not to be interpreted to pose limitations to the applicability of the appended claims. Moreover, the verb "to comprise" and its derivatives are used in the present disclosure to indicate an open limitation that does not exclude the existence of also unrecited features.

Some features of the invention are set forth in the appended claims. Aspects of the invention, however, both as to its construction and its method of operation, together with additional objects and advantages thereof, will be best understood from the following description of example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some components of a sensor apparatus according to an example;
Figure 2 illustrates a method according to an example;
Figure 3A illustrates a method according to an example;
Figure 3B illustrates a method according to an example;
Figure 3C illustrates a method according to an example; and
Figure 4 illustrates a block diagram of some components of an apparatus according to an example.

### DESCRIPTION OF SOME EMBODIMENTS

The examples described in the following pertain to an approach that serves to monitor water flow via a water outlet of a pipe network applied for water distribution to consumers. Hence, the approach described in the present disclosure pertains to monitoring usage of water intended to serve as household water for various purposes such as drinking, food preparation, bathing, brushing teeth, washing clothes and/or washing dishes. The pipe network applied as the water supply network for delivering the household water to consumers is typically pressurized to ensure the water supplied through the network reaching all points of consumption. In this regard, the term water outlet is applied to refer to any water take-off point of the pipe network, such as a faucet (or tap) in a kitchen or in a bathroom, a shower, a flush toilet, etc. Hence, the water outlet may be applied for water discharge or water delivery from the water distribution network. Herein, the term household water is used to refer to the water supplied for domestic use. Alternatively, such water may be referred to as domestic water or clean water. Typically, but not necessary, the household water is also suitable for serving as drinking water. In such scenarios the supplied water may be, alternatively, referred to as potable water. In context of the present disclosure, the concept of household water (i.e. domestic water, clean water) is to be construed broadly, encompassing also water supplied for similar purposes in public spaces and/or building, in office buildings, in industrial establishments, etc.

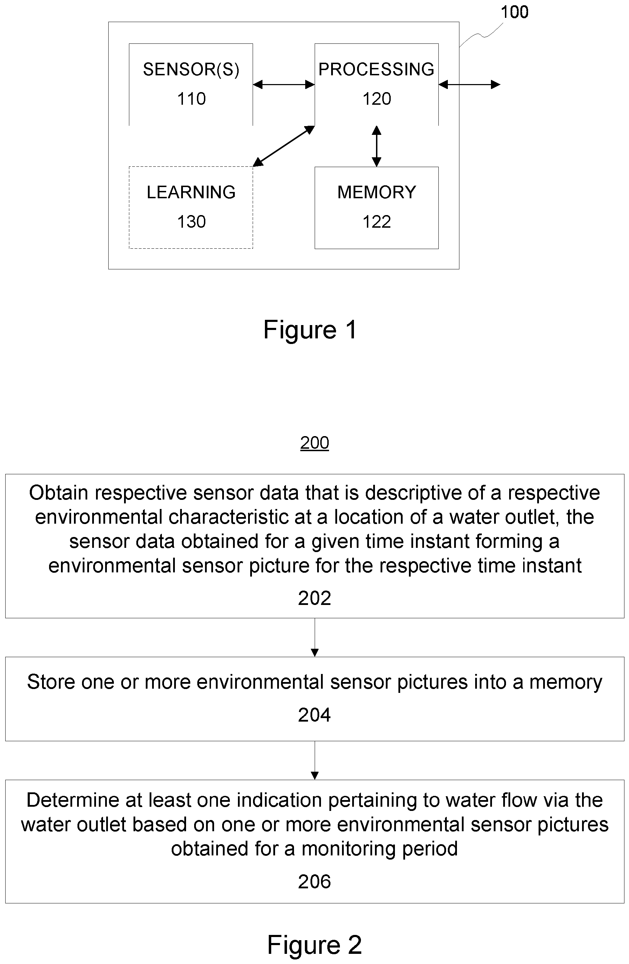

In particular, the present disclosure pertains to an approach where the water flow via a water outlet of the pipe network is monitored based on sensor data that is descriptive of one or more environmental characteristics at the location of the water outlet or in its vicinity. In this regard, Figure 1 illustrates a block diagram of some elements of a sensor apparatus 100 according to an example, which sensor apparatus 100 may be applied for monitoring the water usage via a water outlet of a pipe network applied for distribution of the water. The sensor apparatus 100 comprises a sensor portion 110 a processing portion 120 and a memory 122, where the sensor portion 110 comprises one or more sensors arranged to supply respective sensor data that is descriptive of a respective environmental characteristics at a location of the water outlet, where the memory 122 may be applied to store at least part of the sensor data supplied from the one or more sensors of the sensor portion 110, and where the processing portion 120 is arranged to determine, based on the sensor data obtained from the sensor portion 110, at least one indication that pertains to the water flow via the water outlet. In some embodiments, the apparatus 100 may further comprise a learning portion 130. In the following, the sensor apparatus 100 is referred to, in brief, as an apparatus 100.

Hence, the apparatus 100 may be provided for installation in a space where the water outlet to be monitored resides, the one or more sensors of the sensor portion 110 thereby provided for monitoring the respective one or more environmental characteristics at the location of the water outlet. In this regard, the apparatus 100 in its entirety or the one or more sensors of the sensor portion 110 may be installed e.g. on a ceiling or on a wall of the space or the apparatus 100 may be otherwise arranged in the space such the one or more sensors therein are able to monitor the respective one or more environmental in the respective location of the space. As an example of the latter, the apparatus 100 in its entirety or the one or more sensors of the sensor portion 110 may be positioned on top of furniture placed in the space, e.g. on a tabletop. In one example, the apparatus 100 may be installed at its operating position in a fixed manner, whereas in another example the apparatus 100 in its entirety or the one or more sensors of the sensor portion 110 may be installed at its operating position in a moveable manner. In the latter example, the apparatus 100 or the one or more sensors of the sensor portion 110 may be moved by a user to a suitable location within the space. In case of moveable installation, the apparatus 100 may be able to communicate with other apparatuses via a wireless or wired communication network and indicate its current position via one or more messages transmitted over the communication network.

The one or more sensors of the sensor portion 110 are typically continuously monitoring the respective environmental characteristics at the location of the water outlet and, consequently, each sensor supplies the processing portion 120 with a respective time series of sensor data. The sensor data obtained from the sensor portion 110 for a given time instant may be considered as an environmental sensor picture obtained for the respective time instant. In other words, the environmental sensor picture obtained for a given time instant includes a respective piece of sensor data (e.g. a respective sensor indication) for each of the one or more environmental characteristics under consideration. Consequently, a time series of sensor pictures represents evolution of the environmental characteristics at the location of the water outlet, the time series of sensor pictures hence enabling a study of changes of environmental conditions at the location of the water outlet as a function of time.

According to an example, the sensor portion 110 may comprise or it may be implemented as a sensor module that hosts the one or more sensors of the sensor portion 110. According to another example, the one or more may be provided as separate sensor devices that conceptually constitute the sensor portion 110. Each of the one or more sensors of the sensor portion 110 may be arranged to supply the processing portion 120 with a respective sensor signal that is descriptive of the respective environmental characteristics at the location monitored by the sensor apparatus 110. In this regard, the one or more sensors of the sensor portion 110 may be communicatively coupled, e.g. via respective electrical wires or via a short-range wireless link, to the processing portion 120 to enable supply of the sensor signals. The one or more sensors of the sensor portion 110 may comprise respective sensors of different type. In non-limiting examples, the one or more sensors of the sensor portion 110 may include one or more of the following:
- a motion sensor for monitoring occupancy at the location monitored by the sensor portion 110, e.g. a passive infrared (PIR) sensor, a microwave radar, a lidar, a video camera, a thermal camera, etc.;
- a sound sensor (e.g. a microphone or a microphone array) for capturing sounds at the location monitored by the sensor portion 110;
- a temperature sensor for measuring ambient temperature at the location monitored by the sensor portion 110;
- a humidity sensor (such as a humistor) for measuring air humidity at the location monitored by the sensor portion 110.

Herein, references to the sensor data being descriptive of the respective environmental characteristic *at the location monitored by* the sensor portion 110 is to be construed broadly, encompassing respective environmental characteristic in a portion of the space or in a volume of the space at the monitored location of the space and in its vicinity. Hence, when installed in a space where the water outlet to be monitored resides, the one or more sensors of the sensor portion 110 serve to monitor the respective environmental characteristics in the space at the location of the water outlet. In contrast, the one or more sensors of the sensor portion 110 are not applied for directly measuring any characteristics of the water outlet or those of a pipeline section leading to the water outlet.

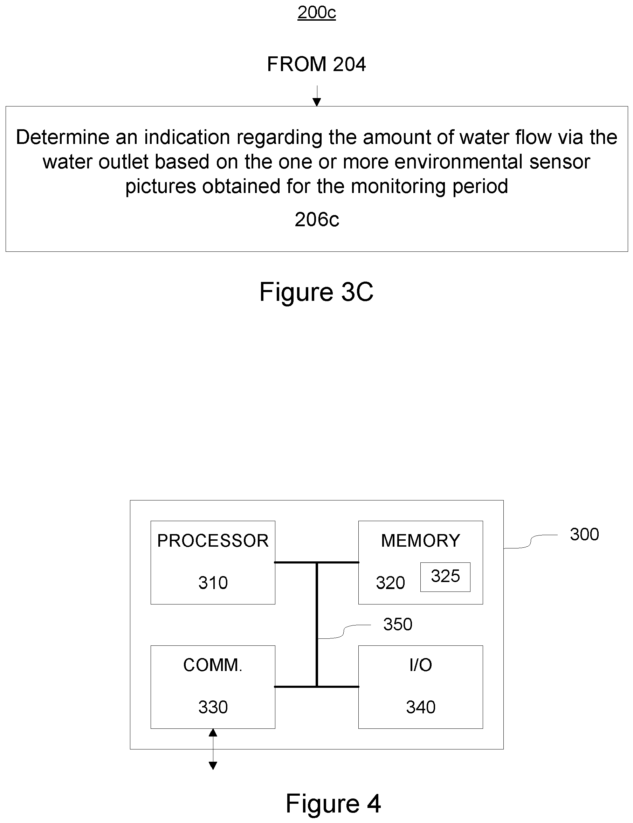

The processing portion 120 and the memory 122 may be implemented via operation of a computer apparatus included in the sensor apparatus 100. According to an example, the computer apparatus may comprise one or more processors and one or more memories, where the one or more memories are arranged to store computer program code that, when executed by the one or more processors, implements the operation of the processing portion 120 according to the present disclosure while the one or more memories may (further) serve as the memory 122. More detailed examples of using a computer apparatus to implement the processing portion 120 and the memory 122 are described later in this text with references to Figure 4.

The processing portion 120 may be arranged to record and/or derive respective sensor indications based on respective sensor signals received from the sensor portion 110, where at least some of the sensor indications may be stored into the memory 122. The sensor indications recorded and/or derived at the processing portion 120 may be jointly referred to as sensor data, whereas the sensor indications recorded and/or derived based on the sensor signal obtained from a certain sensor of the sensor portion 110 may be referred to as (respective) sensor data pertaining to the respective sensor of the sensor portion 110. As non-limiting examples (in view of the exemplifying sensor types described above), the operation of the processing portion 120 in this regard may include the following:
- Deriving occupancy state indications based on a sensor signal received from a motion sensor provided in the sensor portion 110. As examples in this regard, each occupancy state indication may indicate one of occupancy or non-occupancy at the location monitored by the sensor portion 110, a likelihood of occupancy at the location monitored by the sensor portion 110, or a measure that is at least indirectly descriptive of a number of occupants at the location monitored by the sensor portion 110. Due to this manner of using the sensor signal obtained from the motion sensor, the motion sensor may be also referred to as an occupancy sensor
- Deriving sound indications based on a sensor signal received from a sound sensor provided in the sensor portion 110, where each sound indication is descriptive of one or more sound characteristics at the location monitored by the sensor portion 110. As examples in this regard, each sound indication may comprise one or more sound parameters derived from the sound sensor signal, where the one or more sound parameters may be descriptive of temporal and/or spectral characteristic of captured sounds.
- Deriving temperature indications based on a sensor signal received from a temperature sensor provided in the sensor portion 110. As an example in this regard, each temperature indication may indicate ambient temperature at the location monitored by the sensor portion 110.
- Deriving humidity indications based on a sensor signal received from a humidity sensor provided in the sensor portion 110. As an example in this regard, each humidity indication may indicate air humidity at the location monitored by the sensor portion 110.

The processing portion 120 may store at least part of the sensor indications into the memory 122 provided in the apparatus 100 for subsequent use. In this regard, the respective sensor indications recorded and/or derived at the processing portion 120 based on a sensor signal received from the respective sensor of the sensor portion 110 constitute a respective time series of sensor indications, which is indicative of the respective environmental characteristic at the location monitored by the sensor portion 110 as a function time. The sensor data that pertains to the sensor indications recorded and/or derived in the past and stored in the memory 122 may be collectively referred to as a history of sensor data or, in brief, as history data. The sensor data or at least part thereof may be applied, for example, for detecting events related to water flow via the water outlet provided at the location monitored by the sensor portion 110 and, consequently, for determining the at least one indication that pertains to the water flow via the water outlet based on the sensor data, as described in the following via non-limiting examples.

Along the lines described in the foregoing, the sensor data obtained for a given time instant (from the one or more sensors of the sensor portion 110) may be considered as an environmental sensor picture for the respective time instant. Hence, an environmental sensor picture for a given time instant may comprise the respective sensor indications recorded and/or derived based on respective sensor signals obtained from the one or more sensor devices of the sensor portion 110 for the given time instant. For each sensor of the sensor portion 110, a respective sensor indication recorded and/or derived for the given time instant may be the one that is recorded and/or derived at the given time instant or the most recent sensor indication recorded and/or derived before the given time instant. Consequently, the history of sensor data stored in the memory 122 also forms a history of environmental sensor pictures.

Using this terminology, the apparatus 100 may be arranged to monitor the water flow via the water outlet with the one or more sensors of the sensor portion 110 arranged to supply respective sensor data that is descriptive of the respective environmental characteristics at the location of the water outlet and with the processing portion 120 arranged to determine the at least one indication pertaining to the water flow via the water outlet based on one or more environmental sensor pictures obtained for a monitoring period. In a first embodiment within this framework, operation of the processing portion 120 with respect to determining the at least one indication pertaining to the water flow relies on one or more predefined criteria that pertain to sensor data obtained from one or more sensors of the sensor portion 110, whereas in a second embodiment within this framework the operation of the processing portion 120 with respect to determining the at least one indication pertaining to the water flow relies on a predefined model that defines a relationship between one or more environmental sensor pictures obtained during the monitoring period and water flow via the water outlet, where the model may be derived based on a history of environmental sensor pictures. Non-limiting examples of implementing the first and second embodiments are described in the following.

According to a first scenario within the framework of the first embodiment, the processing portion 120 may be arranged to set an indication regarding compromised quality of the water in response to the one or more environmental sensor pictures obtained for the monitoring period indicating environmental characteristics that meet one or more predefined criteria. In this regard, the indication regarding compromised water quality may be set in a situation where the time series of environmental sensor pictures under consideration indicate environmental conditions that suggest increased likelihood of the water available via the water outlet having reduced quality. Herein, the expression *set an indication* is used in the meaning of activating or issuing the indication, whereas the expression *reset the indication* may be applied in referring to an opposite action of deactivating or clearing the indication.

In the first scenario, the monitoring period may have a duration that corresponds to a time period that is expected to result in compromising the quality of the water when the water is standing still in the pipe network of the water distribution system e.g. due to increased amount of microbes or bacteria in the water and/or due a change in water temperature (in comparison to the desired or intended temperature). According to an example in this regard, the monitoring period may have a fixed predefined duration, which may be chosen e.g. from a range from a few hours to a few days, whereas according to another example the monitoring period may have an adjustable duration that is automatically adjusted in dependence of ambient temperature at the location of the water outlet. As an example, the adjustment may be carried out such that the duration of the monitoring period decreases with increasing ambient temperature and increases with decreasing ambient temperature, whereas in another example the adjustment may involve applying a shorter monitoring period when the ambient temperature is within a predefined temperature range and applying a longer monitoring period when the ambient temperature is outside the predefined temperature range.

In a first example within the first scenario, the sensor portion 110 comprises at least the occupancy sensor arranged to supply respective sensor data that is descriptive of occupancy at the location of the water outlet, whereas the one or more criteria considered in setting the indication of compromised water quality comprise a (first) criterion that requires the sensor data from the occupancy sensor to indicate continuous non-occupancy during the monitoring period. In other words, continued non-occupancy at the location of the water outlet (for the duration of the monitoring period) results in the processing portion 120 setting the indication regarding compromised water quality. Hence, the first example proceeds from the assumption that continued non-occupancy at the location of the water outlet implies that no water is drawn from the water outlet during the monitoring period, which in turn is assumed to constitute a scenario where the water quality may have become compromised due to the water having stood still in a section of the pipe network that leads to the water outlet for a prolonged period of time.

In a variation of the first example, the processing portion 120 is further arranged to reset the indication regarding compromised quality of the water in response to the sensor data from the occupancy sensor indicating continued occupancy of at least a predefined time period. Hence, this variation of the first example proceeds from the assumption that person enters the location of the water outlet for the purpose of drawing water from the water outlet and, consequently, continued occupancy for at least the predefined time period is expected to result in drawing the water from the water outlet, thereby flushing the water that potentially has compromised quality due having stood still in the pipe network for a prolonged period of time.

In a second example within the first scenario, the sensor portion 110 comprises at least the sound sensor arranged to supply respective sensor data that is descriptive of sounds at the location of the water outlet, whereas the one or more criteria considered in setting the indication of compromised water quality comprise a (second) criterion that requires the sensor data from the sound sensor not to indicate a sound associated with water flowing from the water outlet. In a variation of the second example, the processing portion 120 is further arranged to reset the indication regarding compromised quality of the water in response to the sensor data from the sound sensor indicating a sound associated with water flowing from the water outlet. Hence, the second example and its variation proceed from the capability of the processing portion 120 to detect sounds associated with water flowing from the water outlet.

Along the lines described in the foregoing, the sensor indications recorded and/or derived based on the sensor signal received from the sound sensor of the sensor portion 110 (i.e. sound sensor data) for a given time instant or for a given time period may comprise one or more sound parameters that are descriptive of temporal and/or spectral characteristics of the sound captured by the sound sensor for the respective time instant or time period (whichever applies), thereby being descriptive of one or more time-domain characteristics and/or one or more frequency domain characteristics of the sound captured by the sound sensor for the respective time instant or time period (whichever applies). In this regard, the sensor portion 120 may have access to one or more predefined reference sound profiles, each defined by respective reference values for the one or more sound parameters under consideration and representing sounds associated with water flowing from the water outlet. According to an example, the one or more reference sound profiles may be stored in the memory 122. Hence, in the course of operation of the apparatus 100, the processing portion 120 may set the indication regarding compromised water quality in response to the sound sensor data obtained for the monitoring period not matching any of the one or more reference sound profiles and it may reset the indication regarding compromised water quality in response to sound sensor data matching (at least) one of the one or more reference sound profiles.

The one or more reference sound profiles may be derived based on sounds captured at the location of the water outlet when water is being drawn therefrom at different water pressures and/or at different ambient noise conditions, the one or more reference sound profiles thereby representing various different scenarios where water is being drawn via the water outlet under consideration. The one or more reference sound profiles may be derived in a learning procedure carried out before adopting the apparatus 100 for use at the location of the water outlet, e.g. upon installing and configuring the apparatus 100 for operation. The learning procedure may be carried out, for example, via operation of the learning portion 130 provided in the apparatus 100 and configured to carry out the learning procedure outlined above. In another example, the learning procedure may be carried out using another apparatus based on sounds captured at the location of the water outlet and the one or more reference sound profiles so derived may be transferred from the other apparatus to the apparatus 100 before adopting the apparatus 100 for use at the location of the water outlet.

Along the lines described above, the one or more predefined reference sound profiles may represent sound of the water flowing via the water outlet at different water pressures, i.e. at different volumes. In this regard, at least some of the one or more reference sound profiles may be associated with respective amounts of water flow via the water outlet. Consequently, when the processing portion 120 detects a match between the sound sensor data obtained for the monitoring period and a given one of the one or more reference sound profiles, the sound sensor data obtained for the monitoring period indicates the amount of water flow associated with the respective one of the one or more reference sound profiles, thereby also enabling derivation of an indication that pertains to the amount of water flowing through the water outlet. In various examples in this regard, the one or more reference sound profiles may include a first reference sound profile that is associated with absence (e.g. non-occurrence) of water flow via the water outlet and one or more second reference sound profiles that are each associated with presence (e.g. occurrence) of water flow via the water outlet. In one example, there may be a single second reference sound profile that is associated with any (non-zero) amount of water flow via the water outlet, whereas in another example there may be two or more second reference sound profiles, each associated with a different (non-zero) amount of water flow via the water outlet.

In a third example within the first scenario, the sensor portion 110 comprises at least the humidity sensor arranged to supply respective sensor data that is descriptive of air humidity at the location of the water outlet, whereas the one or more criteria considered in setting the indication of compromised water quality include a (third) criterion that requires the sensor data from the humidity sensor to indicate air humidity that has remained below a predefined humidity threshold for at least the monitoring period. In a variation of the third example, the processing portion 120 is further arranged to reset the indication regarding compromised quality of the water in response to the sensor data from the humidity sensor indicating humidity that is larger than the predefined humidity threshold. Hence, the third example and its variation proceed from the assumption that the air humidity increases when continuously drawing water via the water outlet, whereas the air humidity typically decreases when no water is running from the water outlet.

In a fourth example within the first scenario, the sensor portion 110 comprises at least the temperature sensor arranged to supply respective sensor data that is descriptive of ambient temperature at the location of the water outlet, whereas the one or more criteria considered in setting the indication of compromised water quality include a (fourth) criterion that requires the sensor data from the temperature sensor to indicate a temperature that is within one of one or more predefined temperature ranges. Hence, the fourth example proceeds from the assumption that the water quality is prone to become compromised in certain temperatures, whereas the risk of compromised water quality is significantly smaller or even negligible in other temperatures. As an example in this regard, the amount of certain microbes or bacteria in the water may increase within a certain temperature range (such as Legionella between 20 to 45 degrees Celsius), whereas the risk the certain microbes or bacteria growing in the water may be considered significantly lower in other temperatures.

According to a second scenario within the framework of the first embodiment, the processing portion 120 may be arranged to set an indication regarding unexpected water flow via the water outlet in response to the one or more sensor pictures obtained for the monitoring period indicating water flow through the water outlet together with continuous non-occupancy at the location of the water outlet for the duration of the monitoring period. Depending on the use case, in the second scenario the water flow through the water outlet may be detected e.g. via using one of the approaches described in the foregoing for the first scenario that is directed to detecting the absence of water flow during the monitoring period, *mutatis mutandis.* Conversely, a change of occupancy state from non-occupancy to occupancy may result in the processing portion 120 resetting the indication regarding the unexpected water flow, either substantially immediately after the change of occupancy status or after a time delay of predefined duration. Moreover, along the lines described in the foregoing in context of the first scenario, the expression *set an indication* is used herein in the meaning of activating or issuing the indication, whereas the expression *reset the indication* may be applied in referring to an opposite action of deactivating or clearing the indication.

In the second scenario, the monitoring period may have a duration that is significantly shorter than that of the first scenario and the duration typically depends on the type of the water outlet and/or the purpose of the space in which the water outlet is located. For example water flowing from a faucet of a kitchen sink, from a faucet of a bathroom sink, from a shower, etc. when no persons are present may be immediately considered as unexpected water flow and hence for such a case a relatively short monitoring period in a range of a few seconds may be applied, whereas for example water flowing from a water outlet supplying water for a washing machine or for a dishwasher even though no persons are present may be considered as expected water flow for a period up to a couple of hours and hence for such a case somewhat longer monitoring period in a range from 30 minutes to a few hours may be appropriate.

According to a third scenario within the framework of the first embodiment, the processing portion 120 may be arranged to determine an indication regarding the amount of water flow via the water outlet based on the one or more environmental sensor pictures obtained for the monitoring period. In this scenario, the sensor portion 110 may comprise at least the sound sensor arranged to supply respective sensor data that is descriptive of sounds at the location of the water outlet, whereas the amount of water flow may be determined via application of the one or more predefined reference sounds profiles and the amounts of water flow associated therewith in a manner described in the foregoing, *mutatis mutandis.* Hence, in one example the indication regarding the amount of water flow may indicate one of absence or presence of water flow via the water outlet, whereas in another example the indication regarding the amount of water flow may indicate either absence of water flow or a (non-zero) amount of water flow via the water outlet.

In the third scenario, duration of the monitoring period may be chosen in view of a preferred interval for observing or updating the indications of the amount of water flow. In non-limiting examples, the duration of the monitoring period may be chosen from a range of a few seconds to a few minutes. A time series of indications of the amount of water flow may serve as useful data e.g. for building management and maintenance in providing indication of water consumption in general or in providing indications of situations where no water is flowing from the water outlet despite water gauges indicating water consumption in the pipe network, thereby reveling potential leaks in the pipe network.

Along the lines outlined in the foregoing, in the second embodiment the operation of the processing portion 120 with respect to determining the at least one indication pertaining to the water flow via the water outlet relies on a predefined model that defines a relationship between one or more environmental sensor pictures obtained during the monitoring period and the water flow via the water outlet. As an example in this regard, the model may be derived via another apparatus carrying out a learning procedure and transferring the model derived via the learning procedure to the apparatus 100 for subsequent application therein by the processing portion 120, whereas in another example the apparatus 100 may comprise a learning portion 130 arranged to carry out the learning procedure to derive the model for subsequent application by the processing portion 120.

The learning procedure involves learning, based on a history of sensor pictures and temporally corresponding indications regarding the amount of water flow through the water outlet, a model that defines a relationship between one or more sensor pictures obtained for the monitoring period and the amount of water flow via the water outlet. Subsequently, the processing portion 120 is arranged to apply said model to determine the amount of water flow through the water outlet based on one or more environmental sensor pictures obtained from the sensor portion and determine the at least one indication pertaining to the water flow via the water outlet based at least on the determined amount of water flow. In one example in this regard, the model is trained to indicate one of absence (e.g. non-occurrence) of water flow via the water outlet or presence (e.g. occurrence) of water flow via the water outlet, whereas in another example the model is trained to indicate one of absence of water flow via the water outlet or one of two or more different amounts of water flow via the water outlet.

The model that defines the relationship between one or more environmental sensor pictures obtained for the monitoring period and the amount of water flow via the water outlet may involve, for example, an artificial neural network (ANN) known in the art that takes the environmental sensor pictures as input and provides an indication of one of occurrence or non-occurrence of water flow via the water outlet as output. Along the lines described above, the learning data for the learning procedure involves a history of environmental sensor pictures, annotated with temporally corresponding indications of the amount of water flow via the water outlet, where the annotations serve as the ground truth data for the supervised learning procedure.

The one or more sensors of the sensor portion 110 applied to supply respective sensor data for recording and/or deriving respective senor indications that constitute the environmental sensor picture for the learning procedure and for the subsequent usage of the model derived via the learning procedure by the processing portion 120 may include any combination of sensor types applied for capturing respective sensor data that is descriptive of a respective environmental characteristics at the location of the sensor portion 110. In particular examples, the environmental sensor picture for a given time instant may consist of respective sensor indications recorded and/or derived based on respective sensor data obtained for the respective time instant from one of the following:
- the occupancy sensor,
- the sound sensor,
- the occupancy sensor and the sound sensor,
- the humidity sensor and/or the temperature sensor together with one or both of the occupancy sensor and the sound sensor.

The list of examples provided above is a non-exhaustive one and hence derivation and application of the model may further apply one or more other sensor types in addition to those described above, e.g. one or more of a light sensor, a carbon dioxide sensor, a volatile organic compound (VOC) sensor, etc. In various examples, the environmental sensor pictures applied for derivation and application of the model may consider respective sensor indications recorded and/or derived based on sensor data from all sensors available in the sensor portion 110.

According to a first scenario within the framework of the second embodiment, the processing portion 120 may be arranged to set an indication regarding compromised quality of the water in response to the model indicating non-occurrence of water flow through the water outlet throughout the monitoring period. Herein, the monitoring period may have a duration that corresponds to a time period that is expected to result in compromising the quality of the water when the water is standing still in the pipe network of the water distribution system, as described in the foregoing in context of the first embodiment. In a variation of the first scenario, the processing portion 120 is further arranged to reset the indication regarding compromised quality of the water in response to the model indicating occurrence of the water flow from the water outlet.

According to a second scenario within the framework of the second embodiment, the processing portion 120 may be arranged to set an indication regarding unexpected water flow via the water outlet in response to the model indicating continuous occurrence of water flow together with (the occupancy sensor indications indicating) continuous non-occupancy at the location of the water outlet for the duration of the monitoring period. The considerations regarding the duration of the monitoring period provided in the foregoing for the second scenario in the framework of the first embodiment apply to the second scenario in the framework of the second embodiment as well, *mutatis mutandis.*

According to a third scenario within the framework of the second embodiment, the processing portion 120 may be arranged to determine an indication regarding the amount of water flow via the water outlet in response to the model indicating presence of water flow within the monitoring period.

In all embodiments, the processing portion 120 may be arranged to respond to the determined at least one indication pertaining to the water flow via the water outlet by providing a corresponding visual indication to a user at or close to the location of the water outlet and/or by transmitting a signal that conveys the at least one indication to another apparatus. In the latter example, the other apparatus may be arranged to provide the visual indication to the user.

In various examples, the visual indication provided for the user may comprise e.g. a visual indication of compromised water quality or a visual indication of the amount of water flow. In this regard, the processing portion 120 or the other apparatus may provide the visual indication via displaying a text, a symbol, an image, etc. associated with the respective aspect of water flow on a display device provided at or close to the location of the water outlet or using a signal light of predefined characteristics to convey the indication of the respective aspect of water flow to the user. Non-limiting examples of providing such visual indications to the user include the following:
- switching on a signal light (such as a light emitting diode (LED) of a predefined color when the indication of compromised quality of water is set and switching off the signal light when the indication of compromised quality of water is not set or it is reset,
- switching on a signal light of a predefined color when the indication of compromised quality of water is set and switching off the signal light when the indication of compromised quality of water is not set or it is reset,
- switching on a signal light of a first predefined color (such as red) when the indication of compromised quality of water is set and switching on a signal light of a second predefined color (such as green) when the indication of compromised quality of water is not set or it is reset, where the signal light of the other color is switched off when the signal light of the first or second color is switched on,
- displaying an indication of compromised water quality on the display device when the indication of compromised quality of water is set and clearing the indication from the display when the indication of compromised quality of water is not set or it is reset,
- displaying an indication of compromised water quality on the display device when the indication of compromised quality of water is set and displaying an indication of non-compromised (i.e. 'normal') water quality on the display when the indication of compromised quality of water is not set or it is reset.

The visual indication of compromised water quality may implicitly prompt the user to flush the water for a predefined time period (e.g. 30 seconds) upon drawing water from the water outlet before consuming the water. Alternatively, written instructions for responding to the visual indication of compromised water quality may be provided at the location or the display device may be further applied to display instructions that prompt the user to flush the water for the predefined time period before consuming the water in case compromised water quality is indicated.

In case the indication under consideration is the indication of unexpected water flow via the water outlet, the indication is preferably provided as a signal transmitted to another apparatus or system, e.g. to a server apparatus or to a server arrangement provided via a cloud computing system. As concrete examples in this regard, the other apparatus or system may be associated e.g. to a data collection system, to a lighting system or to a building management system. In the latter example, other apparatus or system may then invoke a respective alarm in order to inform maintenance personnel to take necessary action due to the unexpected water flow via the water outlet. In case the indication under consideration is the indication of the amount of water flow via the water outlet, the indication is likewise preferably provided as a signal transmitted to another apparatus or system of the kind described above, which may then update water consumption records stored therein accordingly.

The examples regarding operation of the apparatus 100 are provided with references to the structural elements of the apparatus, i.e. the sensor portion 110, the processing portion 120 and (where applicable) the learning portion 130. The functionality provided by the apparatus 100 and described via the examples provided in the foregoing can be, however, also descripted as steps of a method. As an example in this regard, Figure 2 illustrates a method 200, which is provided for monitoring water usage via the water outlet of the pipe network applied for water distribution for consumers, where the method 200 includes the following:
- obtain respective sensor data that is descriptive of a respective environmental characteristic at a location of the water outlet, the sensor data obtained for given time instant forming a respective environmental sensor picture for the respective time instant (block 202);
- store one or more environmental pictures into the memory 122 (block 204);and
- determine at least one indication pertaining to water usage via the water outlet based on the one or more environmental sensor pictures obtained for a monitoring period (block 206).

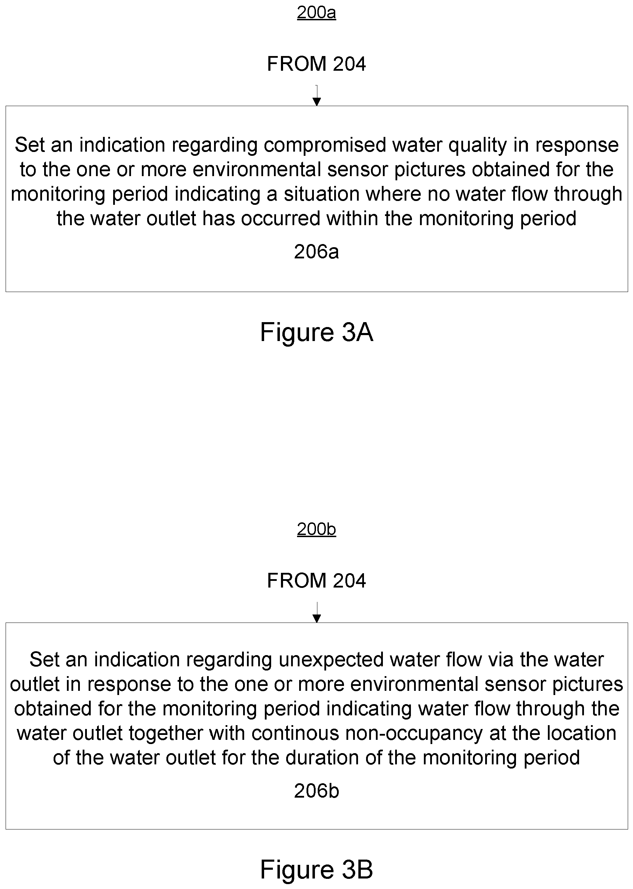

The method 200 may be varied in a number of ways, e.g. in accordance with the examples that pertain to operation and/or structure of the apparatus 100 described in the foregoing. Non-limiting examples in this regard are illustrated in Figures 3A, 3B and 3C:
- In a method 200a illustrated in Figure 3A, the aspect of determining the at least one indication pertaining to the water flow comprises setting an indication regarding compromised quality of the water available via the water outlet in response to the one or more sensor pictures obtained for the monitoring period indicating a situation where no water flow through the water outlet has occurred within the monitoring period (block 206a).
- In a method 200b illustrated in Figure 3B, the aspect of determining the at least one indication pertaining to the water flow comprises setting an indication regarding unexpected water flow via the water outlet in response to the one or more sensor pictures obtained for the monitoring period indicating water flow through the water outlet together with (the occupancy sensor indications indicating) continuous non-occupancy at the location of the water outlet for the duration of the monitoring period (block 206b).
- In a method 200c illustrated in Figure 3C, the aspect of determining the at least one indication pertaining to the water flow comprises determining an indication regarding the amount of water flow based on the one or more environmental sensor pictures obtained the monitoring period (block 206c).

Figure 4 illustrates a block diagram of some components of an apparatus 300 that may be employed to implement operations described in the foregoing with references to the processing portion 120 and/or to the learning portion 130. The apparatus 300 comprises a processor 310 and a memory 320. The memory 320 may store data and computer program code 325. The memory 320 may serve as the memory 122 described in the foregoing. The apparatus 300 may further comprise communication means 330 for wired or wireless communication with other apparatuses and/or user I/O (input/output) components 340 that may be arranged, together with the processor 310 and a portion of the computer program code 325, to provide the user interface for receiving input from a user and/or providing output to the user. The user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the processing portion 120 and/or the learning portion 130. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the processing portion 120 and/or the learning portion 130. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the processing portion 120 and/or the learning portion 130. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the processing portion 120 and/or the learning portion 130.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the processing portion 120 and/or the learning portion 130. The computer-readable non-transitory medium may comprise a memory device, a record medium or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. An apparatus (100) for monitoring water flow via a water outlet of a pipe network for water distribution, the apparatus (100) comprising:
a sensor portion (110) comprising one or more sensors arranged to supply respective sensor data that is descriptive of a respective environmental characteristic at a location of the water outlet, the sensor data obtained for given time instant forming a respective environmental sensor picture for the respective time instant;
a memory (122) arranged to store one or more environmental sensor pictures; and
a processing portion (120) arranged to determine at least one indication pertaining to the water flow via the water outlet based on one or more environmental sensor pictures obtained for a monitoring period.

2. An apparatus (100) according to claim 1, wherein the processing portion (120) is arranged to set an indication regarding compromised quality of the water available via the water outlet in response to the one or more environmental sensor pictures obtained for the monitoring period indicating a situation where no water flow through the water outlet has occurred within the monitoring period.

3. An apparatus (100) according to claim 1 or 2, wherein the processing portion (120) is arranged to set an indication regarding unexpected water flow via the water outlet in response to the one or more environmental sensor pictures obtained for the monitoring period indicating water flow through the water outlet together with continuous non-occupancy at the location of the water outlet for the duration of the monitoring period.

4. An apparatus (100) according to any of claims 1 to 3, wherein the processing portion (120) is arranged to determine an indication regarding an amount of water flow through the water outlet based on the one or more environmental sensor pictures obtained for the monitoring period.

5. An apparatus (100) according to any of claim 2 or 3, wherein the processing portion (120) is arranged to set the indication regarding compromised quality of the water in response to the one or more environmental sensor pictures obtained for the monitoring period indicating environmental characteristics that meet one or more predefined criteria.

6. An apparatus (100) according to claim 5, wherein
the sensor portion (110) comprises an occupancy sensor arranged to supply respective sensor data that is descriptive of occupancy at the location of the water outlet, and
said one more predefined criteria include a first criterion that requires the sensor data from the occupancy sensor to indicate continuous non-occupancy during the monitoring period.

7. An apparatus (100) according to claim 5 or 6, wherein
the sensor portion (110) comprises a sound sensor arranged to supply respective sensor data that is descriptive of sounds at the location of the water outlet, and
said one more predefined criteria include a second criterion that requires the sensor data from the sound sensor not to indicate a sound associated with water flowing from the water outlet during the monitoring period.

8. An apparatus (100) according to any of claims 1 to 7, wherein said monitoring period is a time period of fixed predefined duration.

9. An apparatus (100) according to any of claims 1 to 8, wherein
the sensor portion (110) comprises a temperature sensor arranged to supply respective sensor data that is descriptive of ambient temperature at the location of the water outlet, and
said monitoring period has an adjustable duration that decreases with increasing ambient temperature and that increases with decreasing ambient temperature.

10. An apparatus (100) according to claim 1, wherein the processing portion (120) is arranged to:
apply a predefined model that defines a relationship between one or more environmental sensor pictures obtained for the monitoring period and an amount of water flow via the water outlet to determine the amount of water flow through the water outlet based on one or more environmental sensor pictures obtained from the sensor portion; and
determine the at least indication pertaining to the water flow based at least on the determined amount of water flow.

11. An apparatus (100) according to claim 10, further comprising a learning portion (130) arranged to learn, based on a history of environmental sensor pictures and temporally corresponding indications regarding an amount of water flow through the water outlet, said model that defines a relationship between one or more environmental sensor pictures obtained for the monitoring period and an amount of water flow via the water outlet.

12. An apparatus according to claim 10 or 11, wherein the one or more sensors of the sensor portion comprise one or more of the following:
an occupancy sensor arranged to supply respective sensor data that is descriptive of occupancy at the location of the water outlet,
a sound sensor arranged to supply respective sensor data that is descriptive of sounds at the location of the water outlet,
a humidity sensor arranged to supply respective sensor data that is descriptive of air humidity at the location of the water outlet,
a temperature sensor arranged to supply respective sensor data that is descriptive of ambient temperature at the location of the water outlet.

13. An apparatus according to any of claims 10 to 12, wherein the processing portion (120) is arranged to set an indication regarding compromised quality of the water available via the water outlet in response to said model indicating absence of water flow throughout the monitoring period.

14. An apparatus according to any of claims 10 to 13, wherein the processing portion (120) is arranged to set an indication regarding unexpected water flow via the water outlet in response to said model indicting continuous water flow together with continuous non-occupancy at the location of the water outlet for the duration of the monitoring period.

15. An apparatus (100) according to any of claims 10 to 14, wherein the processing portion (120) is arranged to determine an indication regarding the amount of water flow through the water outlet in response to said model indicating presence of water flow within the monitoring period.

16. A method (200) for monitoring water usage via a water outlet of a pipe network for water distribution, the method comprising:
obtaining respective sensor data that is descriptive of a respective environmental characteristic at a location of the water outlet, the sensor data obtained for given time instant forming a respective environmental sensor picture for the respective time instant;
storing one or more environmental sensor pictures into a memory (122) and
determining at least one indication pertaining to water usage via the water outlet based on the one or more environmental sensor pictures obtained for a monitoring period.
